# EUROPÄISCHE PATENTSCHRIFT

(11) **EP 2 849 988 B1**
(45) Veröffentlichungstag und Bekanntmachung des Hinweises auf die Patenterteilung: **26.10.2016**
(21) Anmeldenummer: 13725912.3
(22) Anmeldetag: 07.05.2013
(51) Int. Cl.: B62D 21/15, B60R 19/34

(54) **CRASHTOLERANTE SYSTEMANORDNUNG IN EINEM KRAFTFAHRZEUGMOTORRAUM**
CRASH-TOLERANT SYSTEM ARRANGEMENT IN A MOTOR-VEHICLE ENGINE COMPARTMENT
AGENCEMENT DE SYSTÈME RÉSISTANT AUX COLLISIONS DANS UN COMPARTIMENT MOTEUR

(30) Priorität: 18.05.2012 DE 102012009940
(43) Veröffentlichungstag der Anmeldung: 25.03.2015
(73) Patentinhaber: Daimler AG, 70327 Stuttgart (DE)
(72) Erfinder: TIEFENBACHER, Gerd, 73760 Ostfildern (DE); HUSS, Roland, 71155 Altdorf (DE); SCHAIBLE, Stefan, 71134 Aidlingen (DE); RAITSCHEV, Peter, 70190 Stuttgart (DE); KIPP, Johannes, 72186 Empfingen (DE); GEORGS, Georg, 73770 Denkendorf (DE); DÜRR, Gerd, 67434 Neustadt (DE)
(74) Vertreter: JENSEN & SON
(86) Internationale Anmeldenummer: PCT/EP2013/001351
(87) Internationale Veröffentlichungsnummer: WO 2013/170941

(56) Entgegenhaltungen:
- EP-A1- 0 679 564
- EP-A2- 1 972 528
- FR-A1- 2 909 322
- JP-A- 2005 096 690
- US-A1- 2002 152 748

## Beschreibung

Die Erfindung betrifft eine crashtolerante Systemanordnung in einem im Vorderwagenbereich eines Kraftfahrzeugs angeordneten Motorraum.

Zur Erhöhung des Insassenschutzes, insbesondere für den Fall eines Frontalaufpralls, ist es bekannt, den Vorderwagenbereich mit energieabsorbierenden und unter Kraftseinwirkung ausreichend verformbaren Strukturen zu versehen. Beispielsweise ist aus der DE 102009016941 A1 und US 2002/152748 eine crashtolerante Systemanordnung in einem im Vorderwagenbereich eines Kraftfahrzeugs angeordneten Motorraum bekannt, die Energieabsorptionselemente aufweist, welche einer Abgasanlage des Kraftfahrzeug zugeordnet sind. Die Anforderung, möglichst kompakt bauende Systeme zur Verfügung zu stellen, welche trotz hoher Komplexität bei geringem Raumangebot in einem Motorraum untergebracht werden können, erschwert jedoch die Anwendung von crashtoleranten Energieabsorptionselementen, da diese meist einen energieverzehrenden Verformungsweg bereitstellen, was einen erhöhten Bauraumbedarf bedingt.

Aufgabe der Erfindung ist es, eine crashtolerante und gleichzeitig kompakte Systemanordnung in einem im Vorderwagenbereich eines Kraftfahrzeug angeordneten Motorraum anzugeben.

Diese Aufgabe wird durch eine Systemanordnung mit den Merkmalen des Anspruchs 1 gelöst.

Die erfindungsgemäße Systemanordnung umfasst einen im Motorraum angeordneten Verbrennungsmotor mit einem Motorblock, einen Abgase des Verbrennungsmotors aufnehmenden Abgassammler, einen dem Verbrennungsmotor zugeordneten Abgasturbolader mit einem Abgaseinlass und einem Abgasauslass sowie ein Abgasreinigungssystem mit einem in Fahrtrichtung vor dem Abgasturbolader angeordneten, im Wesentlichen zylindrischen ersten Katalysatorgehäuse, in dem ein erstes Abgaskatalysatorelement angeordnet ist. Charakteristischerweise ist ein erstes Abgasleitungselement zur Abgasführung vom Abgasauslass des Abgasturboladers zum ersten Katalysatorgehäuses vorgesehen, das sich vom Abgasauslass des Abgasturboladers zu einem Einlasstrichter des ersten Katalysatorgehäuses erstreckt und eine im Wesentlichen entgegen der Fahrtrichtung auf das erste Katalysatorgehäuse einwirkende Druckkraft wenigstens teilweise auf den Abgasturbolader übertragenen kann. Der Abgasturbolader ist durch eine erste Befestigungsvorrichtung mit dem Abgassammler und durch eine zweite Befestigungsvorrichtung mit dem Motorblock mechanisch verbunden, wobei die erste und die zweite Befestigungsvorrichtung so ausgelegt sind, dass ein Lösen der Verbindung des Abgasturboladers mit dem Abgassammler und/oder ein Lösen der Verbindung des Abgasturboladers mit dem Motorblock innerhalb eines vorgegebenen oberen Wertebereichs für die Druckkraft erfolgt.

Infolge dieser Auslegung der Befestigungen des Abgasturboladers mit dem Verbrennungsmotor ist bei Einwirkung einer insbesondere annähernd frontal auf das erste Katalysatorgehäuse einwirkenden Aufprallkraft eine energieabsorbierende Verschiebung des an den Abgasturbolader angekoppelten ersten Katalysatorgehäuses ermöglicht, ohne dass Teile des Abgasreinigungssystems in den Fahrzeuginnenraum gedrückt werden. Diese Auslegung erweist als besonders vorteilhaft bei einem in Fahrtrichtung längs im Motorraum angeordneten Verbrennungsmotor bzw. Motorblock, der charakteristischerweise mehrere hintereinander angeordneten Zylinder aufweist und insbesondere, wenn dabei ein in Fahrtrichtung gesehen vorderer Abschluss des ersten Katalysatorgehäuses vor einem vorderen Ende des Motorblocks angeordnet ist. Eine annähernd frontal einwirkende Aufprallkraft beaufschlagt so in energieabsorbierender Weise zunächst das Abgasreinigungssystem, und eine Beaufschlagung des Motorblocks, welche diesen in Richtung Fahrgastraum verschieben könnte, ist vermieden. Die Ausführung der Befestigungen des Abgasturboladers mit einer definierten Festigkeit gewährleistet ein gezieltes Ablösen des Turboladers an welchem das erste Katalysatorgehäuse über das erste Abgasleitungselement befestigt ist und ermöglicht so eine weitere kraftabsorbierende Verschiebung des ersten Katalysatorgehäuses, wodurch eine Blockade vermieden wird. Dabei ist durch die Dimensionierung und die Ausführung der Turboladerbefestigungen festgelegt, bei welcher Größe der auf sie einwirkenden Druckkraft ein Lösen der Verbindungen des Turboladers erfolgt.

Vorzugsweise ist es vorgesehen, dass die Befestigungsvorrichtung zur Verbindung des Abgasturboladers mit dem Motorblock als insbesondere profiliertes Halteblech ausgebildet ist, welches mit einer Schraubverbindung einerseits am Motorblock und andererseits am Abgasturboladergehäuse bzw. an dessen Turbinengehäuse befestigt ist. Ein Lösen der Verbindung des Abgasturboladers mit dem Motorblock infolge einer crashbedingten Krafteinwirkung erfolgt bevorzugt durch Lösen der Schraubverbindung des Halters am Turbinengehäuse. Die Befestigungsvorrichtung zur Verbindung des Abgasturboladers mit dem Abgassammler ist bevorzugt als lösbare Leitungsverbindung etwa in Form einer Schellenverbindung ausgeführt. Für das Crashverhalten hat es sich als besonders vorteilhaft erwiesen, dass nach Ablösen des Abgasturboladers vom Verbrennungsmotor infolge der gelösten Verbindungen des Abgasturboladers eine weitere energieabsorbierende Verschiebung bzw. Verformung von Teilen des Abgasreinigungssystems und insbesondere des ersten Katalysatorgehäuses ermöglicht ist. Vorzugsweise sind die Befestigungsvorrichtungen so ausgelegt, dass bei einer Krafteinwirkung zunehmender Größe die Verbindung des Abgasturboladers mit dem Abgassammler vor der Verbindung mit dem Motorblock gelöst wird. Damit eine annähernd frontal wirkende Aufprallkraft vom ersten Katalysatorgehäuse über das erste Abgasleitungselement wirksam auf den Abgasturbolader übertragen werden kann, ist der Abgasturbolader bevorzugt so angeordnet, dass sein Abgasauslass nach vorn in Fahrtrichtung orientiert ist. Ferner erstreckt sich vorzugsweise das erste Abgasleitungselement wenigstens abschnittsweise etwa geradlinig vom Abgasturboladerauslass zum Einlasstrichter des ersten Katalysatorgehäuses.

In Ausgestaltung der Erfindung weist das erste Abgasleitungselement einen Balgabschnitt aufweist, der eine Verkürzung um wenigstens 20 mm innerhalb eines vorgegebenen unteren Wertebereichs für die Druckkraft erfährt, dessen Werte kleiner als die Werte des oberen Wertebereichs sind. Der Balgabschnitt ist damit vergleichsweise weich ausgelegt. Dadurch wird in vorteilhafter Weise eine energieabsorbierende Verformung ermöglicht, bevor es bei weiterer Erhöhung der Krafteinwirkung zu einer Zerstörung bzw. zu einem Lösen der vorgesehenen Verbindungen des Abgasturboladers kommt. Der Balgabschnitt bewirkt neben eine Kraftabsorption im Crashfall in vorteilhafter Weise beim normalen Betrieb zusätzlich eine Entkopplung bzw. Dämpfung von vom Motorblock ausgehenden Schwingungen. Dabei kann der Balgabschnitt auch für Verkürzungen von mehr als 20 mm ausgelegt sein. Als vorteilhaft sind maximale Verkürzungsstrecken von bis zu 40 mm anzusehen.

In weiterer Ausgestaltung der Erfindung sind die erste und die zweite Befestigungsvorrichtung so ausgelegt, dass ein Lösen der Verbindung des Abgasturboladers mit dem Abgassammler und/oder der Verbindung des Abgasturboladers mit dem Motorblock bei einer Druckkraft von weniger als 40 kN erfolgt. Die Obergrenze des oberen Wertebereichs für die auf das erste Katalysatorgehäuse einwirkende Druckkraft liegt somit bei 40 kN. Es kann jedoch ein Lösen der Verbindungen bereits bei niedrigeren Werten bis hinab zu etwa 20 kN vorgesehen sein. Eine entsprechende Auslegung kann beispielweise durch eine mit entsprechender Anzugskraft verschraubte Verbindung des Turbinengehäuses in einer Gabellochaufnahme des Halteblechs bewerkstelligt werden, bei welcher die Schraube bei Einwirkung der Druckkraft aus dem Gabelloch gedrückt wird. In Bezug auf ein bei definierter Krafteinwirkung verursachtes Lösen der Verbindung mit dem Abgassammler kann im Falle einer Schellenverbindung beispielsweise eine vorgegebene Festigkeit der Schellenbügel vorgesehen sein. Wie von den Erfindern festgestellt wurde, ist durch eine solche Auslegung eine besonders wirksames Ausnutzen von Verformungsenergien ermöglicht.

In weiterer Ausgestaltung der Erfindung beträgt eine Obergrenze des unteren Wertebereichs für die Druckkraft 30 kN. Eine maximale Verkürzung des Balgabschnitts ist somit spätestens dann erreicht, wenn die Druckkraft 30 kN beträgt. Durch diese Auslegung ist gewährleistet, dass bei einem Crashfall von geringerer Stärke der Schaden begrenzt bleibt.

In weiterer Ausgestaltung der Erfindung ist das erste Katalysatorgehäuse wenigstens annähernd senkrecht im Motorraum angeordnet. Damit wird in vorteilhafter Weise ausgenutzt, dass das Gehäuse in radialer Richtung eine geringere Steifigkeit bzw. Festigkeit aufweist als in axialer Richtung. Eine annähernd frontal auf das erste Katalysatorgehäuse einwirkende Aufprallkraft kann so auf verbesserte Weise aufgenommen werden. Zudem ermöglicht die stehende Anordnung des ersten Katalysatorgehäuses eine besonders kompakte Ausführung des Abgasreinigungssystems.

In weiterer Ausgestaltung der Erfindung weist das erste Katalysatorgehäuse wenigstens abschnittsweise eine gerippte Struktur auf. Durch diese Ausführung weist das erste Katalysatorgehäuses in Richtung der Krafteinwirkung eine verminderte Steifigkeit auf und ermöglicht auf verbesserte Weise energieabsorbierende Verformungen.

In weiterer Ausgestaltung der Erfindung weist das Abgasreinigungssystem ein zylindrisches zweites Katalysatorgehäuse auf, in dem ein zweites Abgaskatalysatorelement und/oder ein Partikelfilterelement angeordnet ist, wobei ein zweites Abgasleitungselement zur Abgasführung von der Auslassseite des ersten Katalysatorgehäuses zur Einlassseite des zweiten Katalysatorgehäuses vorgesehen ist, das an einer Trennstelle lösbar mit einem Einlasstrichter des zweiten Katalysatorgehäuses verbunden ist. Durch Vorsehen eines weiteren filtertechnisch und/oder katalytisch wirksamen Abgasreinigungselements ist die Wirksamkeit des Abgasnachbehandlungssystems verbessert bzw. erweitert, wobei infolge der mit einer Trennstelle versehenen lösbaren Verbindung des zweiten mit dem ersten Katalysatorgehäuse bei deren Lösen ein weiterer Verschiebungs- bzw. Verformungsspielraum ermöglicht ist, welcher ebenfalls energieabsorbierend wirkt und die Crashtoleranz erhöht. Dieser Effekt kann weiter verbessert werden, wenn in weiterer Ausgestaltung der Erfindung das zweite Abgasleitungselement wenigstens abschnittsweise gerippt ausgeführt ist oder einen Balgabschnitt aufweist.

In weiterer Ausgestaltung der Erfindung ist in einem Übergangsbereich vom zweiten Abgasleitungselement zum zweiten Katalysatorgehäuse eine als Soll-Knickstelle wirkende Strukturmodifikation vorgesehen. Infolge der Soll-Knickstelle ist ein gezielt gerichtetes Abknicken ermöglicht, wodurch eine blockbildende Orientierung von erstem und zweitem Katalysatorgehäuse im Sinne einer Erhöhung der Steifigkeit bei Einwirkung einer gegen die Fahrtrichtung wirkenden Kraft vermieden ist. Die Soll-Knickstelle ist vorzugsweise nahe an einem Übergang zwischen dem zweiten Abgasleitungselement und einem Einlauftrichter des zweiten Katalysatorgehäuses vorgesehen und kann beispielsweise durch eine Einkerbung realisiert werden.

In weiterer Ausgestaltung der Erfindung ist das zweite Katalysatorgehäuse wenigstens annähernd waagrecht im Motorraum und geodätisch unterhalb des Abgasturboladers sowie in Fahrtrichtung gesehen hinter dem ersten Katalysatorgehäuse und mit geringem oder vernachlässigbaren seitlichem Versatz zum ersten Katalysatorgehäuse derart angeordnet, dass die Oberseite des zweiten Katalysatorgehäuses im Bereich der geodätischen Anordnungshöhe des ersten Katalysatorgehäuses liegt. Das erste und das zweite Katalysatorgehäuse sind somit auf der selben Seite des Motorblocks angeordnet. In Verbindung mit der stehenden Anordnung des ersten Katalysatorgehäuses ergibt sich durch die liegende Anordnung des zweiten Katalysatorgehäuses unterhalb des Abgasturboladers eine besonders kompakte Ausführung des Abgasreinigungssystems. Infolge dieser Anordnung weist die Abgasführung für aus dem ersten Katalysatorgehäuse austretendes Abgas vor dem Eintritt in das zweite Katalysatorgehäuse eine Umlenkung um wenigstens annähernd 90 Grad auf. Dies begünstigt ein energieverzehrendes Abknicken des zweiten Abgasleitungselements bei Einwirkung einer entgegen der Fahrtrichtung gerichteten Aufprallkraft.

In weiterer Ausgestaltung der Erfindung ist das zweite Katalysatorgehäuse abgaseintrittseitig über einen ersten Halter und abgasaustrittseitig über einen zweiten Halter kraftschlüssig und/oder formschlüssig mit dem Motorblock verbunden, wobei der erste Halter eine in Fahrtrichtung gesehen geringere Biegesteifigkeit als der zweite Halter aufweist. Der erste Halter erlaubt somit eine energieabsorbierende Bewegung insbesondere entgegen der Fahrtrichtung von mit dem ersten Halter in Verbindung stehenden Bauteilen. Der steifer ausgeführte zweite Halter behindert bei Einwirken einer frontalen Crashkraft maßgeblich ein Eindringen des in Längsrichtung vergleichsweise steifen zweiten Katalysatorgehäuses in den Fahrgastraum.

In weiterer Ausgestaltung der Erfindung ist im Bereich zwischen dem ersten Katalysatorgehäuse und dem zweiten Katalysatorgehäuse ein Flachmaterialbauteil vorgesehen, dessen Flächennormale wenigstens annähernd senkrecht zur Fahrtrichtung orientiert ist. Dies ermöglicht eine Zerstörung des ersten Katalysatorgehäuses und des in diesem angeordneten ersten Abgaskatalysatorelements durch das Flachmaterial, wenn durch Einwirken der Druckkraft das erste Katalysatorgehäuse auf das zweite Katalysatorgehäuse aufgeschoben wird. Durch die Zerstörung wird die Steifigkeit des ersten Katalysatorgehäuses drastisch verringert und somit eine Blockbildung vermieden und eine weitere energieabsorbierende Verformung ermöglicht. Für eine besonders wirksame Funktion des Flachmaterials in dem genannten Sinn ist es vorteilhaft, wenn dessen Flächennormale senkrecht oder annähernd senkrecht orientiert ist. Das Flachmaterial ist zweckmäßigerweise am zweiten Katalysatorgehäuse befestigt und kann beispielsweise integraler Bestandteil eines Halters sein.

In weiterer Ausgestaltung der Erfindung ist im Bereich zwischen dem ersten Katalysatorgehäuse und dem zweiten Katalysatorgehäuse ein Haltebauteil für das erste und/oder das zweite Katalysatorgehäuse vorgesehen, welches eine zur Fahrtrichtung 8 und schräg geodätisch nach oben gerichtete Gleitfläche aufweist, welche ein Aufschieben des ersten Katalysatorgehäuses auf das zweite Katalysatorgehäuse ermöglicht. Dadurch wird eine Blockbildung von erstem und zweitem Katalysatorgehäuse bei Einwirken einer entsprechend großen Aufprallkraft vermieden, da dem ersten Katalysatorgehäuse ein weiterer Ausweichweg zur Verfügung gestellt wird.

In weiterer Ausgestaltung der Erfindung sind das erste Katalysatorgehäuse und/oder das zweite Katalysatorgehäuse wenigstens teilweise, vorzugsweise überwiegend aus einem Metallmaterial mit einer Materialstärke von weniger als 1 mm ausgeführt. Die Ausführung des Gehäusematerials als Dünnblech vermindert die Steifigkeit der Gehäuse, wodurch eine Verformung mit Aufnahme einer entsprechenden Energieabsorption auf besonders wirksame Weise ermöglicht wird.

In weiterer Ausgestaltung der Erfindung ist das erste Katalysatorgehäuse mittels einer Schweißnaht mit dem zweiten Abgasleitungselement verbunden, wobei die Schweißnaht eine Sollbruchstelle aufweist, welche bei Einwirkung einer Zugkraft vorgegebener Größe auf die Sollbruchstelle ein Aufreißen der Schweißnaht ermöglicht. Dadurch wird bei Einwirken einer Aufprallkraft bestimmter Größe ein Ablösen des ersten Katalysatorgehäuses vom zweiten Abgasleitungselement erreicht. Somit ist eine weitere Verschiebung des ersten Katalysatorgehäuses weitgehend unabhängig von seiner Anbindung an das zweite Katalysatorgehäuse ermöglicht und daher ebenfalls eine versteifend wirkende Blockbildung vermeidbar.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen. Die Figuren zeigen in:
Fig. 1 eine schematische Darstellung einer vorteilhaften Ausführung der erfindungsgemäßen Systemanordnung in einer Teilansicht quer zur Fahrtrichtung,
Fig. 2 eine schematische Darstellung von Befestigungen des Turboladers der Systemanordnung nach Fig. 1,
Fig. 3 eine schematische Darstellung der Systemanordnung nach Figur 1 in einer Teilansicht schräg zur Fahrtrichtung und
Fig. 4 eine ausschnittsweise Ansicht der erfindungsgemäßen Systemanordnung gemäß Figur 1.

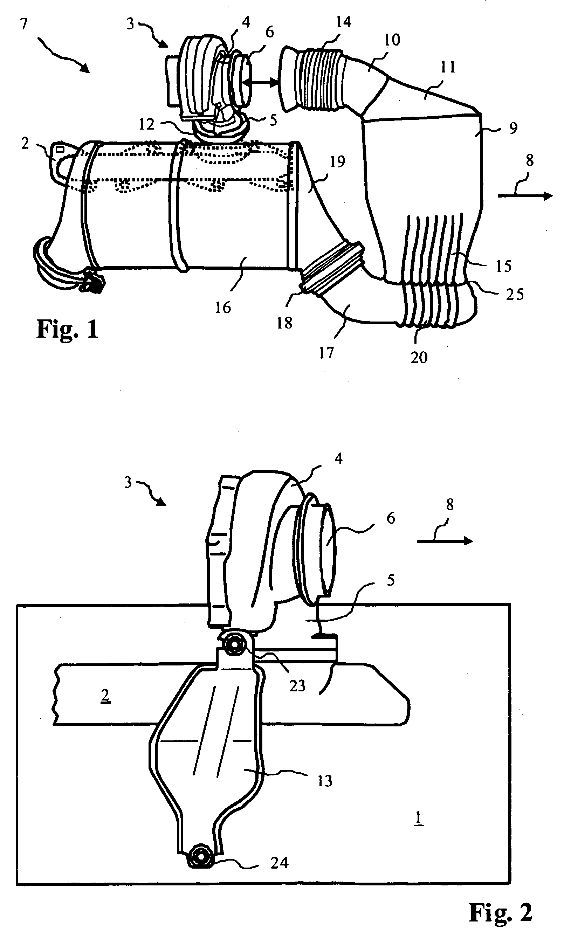

Fig. 1 zeigt in einer schematischen Ansicht ein Abgasreinigungssystem 7, einen Abgasturbolader 3 und einen Abgassammler 2 als wesentliche Baugruppen der erfindungsgemäßen crashtoleranten Systemanordnung in einer vorteilhaften Ausführung bzw. Anordnung.

Das in einem Motorraum in einem Vorderwagenbereich eines Kraftfahrzeugs angeordnete Abgasreinigungssystem 7 weist ein erstes Katalysatorgehäuse 9 und ein zweites Katalysatorgehäuse 16 auf. Die Katalysatorgehäuse 9, 16 weisen vorliegend eine kreiszylindrische Form auf. Dabei ist das erste Katalysatorgehäuse 9 stehend, d.h. zumindest annähernd vertikal und bezüglich der mit einem Pfeil 8 bezeichneten Fahrrichtung wenigstens annähernd fluchtend vor dem liegend, d.h. wenigstens annähernd horizontal angeordneten zweiten Katalysatorgehäuse 16 angeordnet. Zwischen dem ersten Katalysatorgehäuse 9 und dem zweiten Katalysatorgehäuse 16 ist in Fahrtrichtung 8 gesehen ein Freiraum vorgesehen, der im Falle einer entgegen der Fahrtrichtung 8 auf das erste Katalysatorgehäuse 9 einwirkenden Aufprallkraft Spielraum für ein kräfteverzehrendes Wegdrücken des ersten Katalysatorgehäuses 9 entgegen der Fahrtrichtung 8 ermöglicht. Ein im ersten Katalysatorgehäuse 9 angeordnetes Abgaskatalysatorelement ist bevorzugt als Oxidationskatalysator ausgebildet. Im zweiten Katalysatorgehäuse 16 ist vorzugsweise ein Partikelfilter in Fahrtrichtung 8 gesehen vor einem SCR-Katalysator angeordnet, wobei der Partikelfilter vorzugsweise mit einer SCR-Katalysatorbeschichtung versehen ist. Infolge dieser Ausführungsform ist eine umfassende Abgasreinigung und ein kompakter, platzsparender Aufbau des Abgasreinigungssystems 7 ermöglicht.

Das erste Katalysatorgehäuse 9 erhält Abgas eines nicht dargestellten, vorliegend vierzylindrig ausgeführten Dieselmotors über ein erstes Abgasleitungselement 10, welches in einen Einlasstrichter 11 des ersten Katalysatorgehäuses 9 mündet. Das erste Abgasleitungselement 10 ist vorliegend im Wesentlichen waagrecht und in Fahrtrichtung 8 orientiert, während der Einlasstrichter 11 ein Umlenken der Abgasströmungsrichtung um etwa 90 Grad bewirkt. Dabei liegt ein in Fahrtrichtung 8 gesehen vorderer Wandbereich des ersten Katalysatorgehäuses 9 mit einem Abstand vor einem vorderen Abschluss des Dieselmotors, wodurch eine annähernd frontale Aufprallkraft zunächst auf das erste Katalysatorgehäuse 9 einwirkt. Über ein zweites Abgasleitungselement 17 wird oxidationskatalytisch behandeltes Abgas aus dem ersten Katalysatorgehäuse 9 dem zweiten Katalysatorgehäuse 16 zugeleitet. Dabei ist das zweite Abgasleitungselement 17 über eine vorliegend als Schellenverbindung ausgeführte lösbare Trennstelle 18 mit einem Einlasstrichter 19 des zweiten Katalysatorgehäuses 16 verbunden. Vor einer Umlenkung des Abgases von einer im Wesentlichen vertikalen Richtung in eine im Wesentlichen horizontale Richtung ist in einer sich verjüngenden Auslaufstrecke des ersten Katalysatorgehäuses 9 ein Injektor für wässrige Harnstofflösung als Reduktionsmittel zur selektiven katalytischen Stickoxidreduktion vorgesehen, der die Harnstofflösung auf im Inneren der Auslaufstrecke angeordnete Mischer- und Verdampferplatten aufsprüht, was nicht gesondert dargestellt Ist. Das zweite Abgasleitungselement 20 fungiert dabei als Misch- und Hydrolysestrecke für die zugeführte Harnstofflösung.

Einlassseitig ist das erste Katalysatorgehäuse 9 über das erste Abgasleitungselement 10 mit einem in Fahrtrichtung 8 gesehen offenen Abgasauslass 6 eines Turbinengehäuses 4 des Abgasturboladers 3 verbunden. Ein Abgaseinlass 5 des Turboladers 3 bzw. des Turbinengehäuses 4 kommuniziert dabei mit dem Abgassammler 2 des Dieselmotors, welcher vom Dieselmotor ausgestoßene Abgase aufnimmt. Zur einlassseitigen Verbindung des Turbinengehäuses 4 mit dem Abgassammler 2 ist eine vorliegend als Schellenverbindung ausgeführte lösbare Trennstelle 12 vorgesehen. Der Abgasturbolader 3 ist wie dargestellt geodätisch oberhalb des zweiten Katalysatorgehäuses 16 und auch oberhalb des Abgassammlers 2 angeordnet, wodurch eine schmal und kompakt bauende Ausführung ermöglich ist. Neben der mechanischen Anbindung über die Trennstelle 12 am Abgassammler 2 ist eine weitere mechanische Befestigung des Abgasturboladers 3 bzw. des Turbinengehäuses 4 vorgesehen, was nachfolgend unter Bezug auf Fig. 2 näher erläutert ist.

In Fig. 2 ist speziell eine Befestigung des Abgasturboladers 3 bzw. des Turbinengehäuses 4 mit einem lediglich grob schematisch skizzierten Motorblock 1 des Dieselmotors veranschaulicht. Die Befestigung wird durch eine Befestigungsvorrichtung 13 bewerkstelligt, die vorliegend ein als in Fahrtrichtung 8 starres profiliertes Halteblech umfasst., über welches das Turbinengehäuse 4 mit dem Motorblock 1 mechanisch verbunden ist. Hierfür weist die Befestigungsvorrichtung 13 eine vorliegend als Schraubverbindung ausgeführte erste Verbindungsstelle 23 auf, mit welcher das Halteblech am Turbinengehäuse 4 befestigt ist. Über eine zweite, vorliegend ebenfalls als Schraubverbindung ausgeführte zweite Verbindungsstelle 24 ist das Halteblech am Motorblock 1 befestigt.

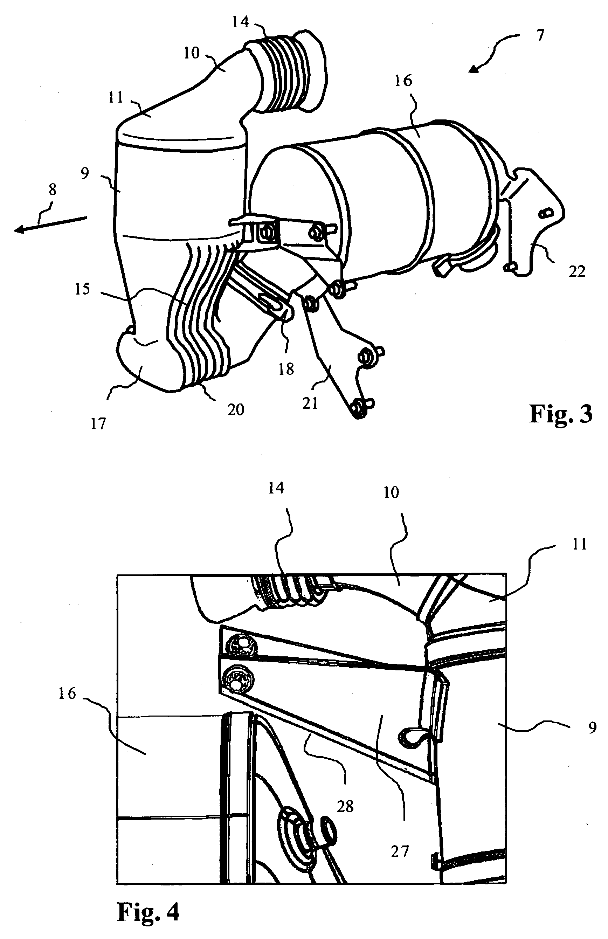

Das Abgasreinigungssystem 7 ist ebenfalls am Motorblock 1 befestigt, was in Fig. 3 veranschaulicht ist. In Fig. 3 ist das in Fig. 1 quer zur Fahrtrichtung 8 dargestellte Abgasreinigungssystem 7 in einer Ansicht schräg von vorn in Bezug auf die Fahrtrichtung 8 gezeigt. Dabei sind ein erster Halter 21 und ein zweiter Halter 22 zu erkennen. Mittels des ersten Halters 21 erfolgt eine abgaseintrittsseitige Befestigung des zweiten Katalysatorgehäuses 16 am Motorblock 1. Mittels des zweiten Halters 23 erfolgt eine abgasaustrittseitige Befestigung des zweiten Katalysatorgehäuses 16 am Motorblock 1.

Die erfindungsgemäße Systemanordnung ist durch verschiedene nachfolgend unter Bezug auf die Figuren 1 bis 4 beschriebene konstruktive Maßnahmen besonders crash-tolerant in dem Sinne ausgeführt, dass eine insbesondere annähernd frontale, d.h. entgegen der Fahrtrichtung 8 einwirkende Aufprallkraft wirksam absorbiert werden und ein Eindringen von Komponenten, insbesondere des Abgasreinigungssystems 7, in den Fahrgastraum zumindest in den meisten Fällen ganz oder weitgehend verhindert werden kann.

Bei einem im Wesentlichen frontalen Aufprall entsprechender Stärke auf ein Hindernis, wie beispielsweise eine starre Barriere, werden in Fahrtrichtung 8 vor dem Abgasreinigungssystem 7 angeordnete Bauteile zunächst eingedrückt und die Aufprallkraft wirkt dann auf das erste Katalysatorgehäuse 9, dessen vordere Begrenzung in Fahrtrichtung 8 bevorzugt vor der vorderen Begrenzung des Motorblocks 1 liegt. Infolge dieser Krafteinwirkung wird das erste Katalysatorgehäuse 9 gegen die Fahrtrichtung 8 verschoben, was insbesondere dadurch ermöglicht wird, dass das erste Abgasleitungselement 10 einen Balgabschnitt 14 aufweist, welcher eine energieabsorbierende Verformung ermöglicht. Ferner wird eine Verschiebung des ersten Katalysatorgehäuses 9 auch dadurch ermöglicht, dass im Bereich der Verbindung von zweitem Abgasleitungselement 17 und zweitem Katalysatorgehäuse 16 eine Strukturmodifikation vorgesehen ist, welche ein Abknicken des zweiten Abgasleitungselements 17 ermöglicht. Die Strukturmodifikation kann beispielsweise als Einkerbung unmittelbar vor der Trennstelle 18 im zweiten Abgasleitungselement 17 und/oder unmittelbar nach der zweiten Trennstelle 18 beim Übergang zum Einlasstrichter 19 des zweiten Katalysatorgehäuses 16 vorgesehen sein. Es kann eine Strukturmodifikation bzw. Sollknickstelle vorgesehen sein, die ein Abknicken nach oben oder auch ein Abknicken nach unten fördert. Zusätzlich kann die zweite Trennstelle 18 so ausgelegt sein, dass deren Lösen bei einer Krafteinwirkung vorgegebener Größe erfolgt. Ein Abknicken des zweiten Abgasleitungselements 17 nach unten mit Bereitstellung eines Verformungswegs wird auch dadurch gefördert, dass der Einlasstrichter 19 des zweiten Katalysatorgehäuses 16 schräg nach unten gerichtet ist und daher bei einer entgegen der Fahrtrichtung 8 einwirkenden Kraft eine verringerte Steifigkeit aufweist. Auf diese Weise kann sich der Abstand zwischen dem erstem Katalysatorgehäuse 9 und zweitem Katalysatorgehäuse 16 unter Energieaufnahme verkürzen und es ist ein Verformungsweg geschaffen.

Eine Verschiebung des gesamten Abgasreinigungssystems 7 kann durch ein Nachgeben insbesondere des ersten Halters 21 aber auch des zweiten Halters 22 ermöglicht sein. Hierzu ist zweckmäßig der erste Halter in Fahrtrichtung 8 gesehen weniger steif als quer dazu ausgelegt. Für den zweiten Halter 22 ist eine konstruktive Auslegung und Befestigung am Motorblock 1 derart vorgesehen, dass er zumindest ab einer bestimmten Größe der entgegen der Fahrtrichtung 8 einwirkenden Kraft eine im Vergleich zum ersten Halter 21 deutlich höhere Steifigkeit in Bezug auf ein Abbiegen entgegen die Fahrtrichtung 8 aufweist. Dadurch ist ein Eindringen des zweiten Katalysatorgehäuses 16 in den Fahrgastraum auch bei vergleichsweise großen Kräften verhindert oder zumindest behindert, da das zweite Katalysatorgehäuse 16 nach Zurücklegen eines gewissen Verschiebungsweges auf den dann biegesteifen zweiten Halter 22 aufläuft und eine weitere Verschiebung verstärkt behindert ist.

Bei einer nach Teleskopieren des Balgabschnitts 14 des ersten Abgasleitungselements 10 weiter anwachsenden Druck- bzw. Aufprallkraft wird diese verstärkt über das erste Abgasleitungselement 10 auf den Abgasturbolader 3 übertragen. Um einen weiteren Verformung- bzw. Verschiebungsweg zu ermöglichen, ist vorgesehen, dass ab einer bestimmten Krafteinwirkung von vorzugsweise maximal 40 kN entgegen der Fahrtrichtung 8 auf die Frontseite des ersten Katalysatorgehäuses 9 bzw. auf das Turbinengehäuse 4 die Halterung des Turbinengehäuses 4 an der ersten Verbindungsstelle 23 gelöst wird. Vorzugsweise ist die erste Trennstelle 12 so ausgelegt, dass sie ebenfalls bei einer in diesem Bereich liegenden Krafteinwirkung gelöst wird. Insbesondere ist es bevorzugt vorgesehen, die Verbindungen des Abgasturboladers 3 mit dem Abgassammler 2 und dem Motorblock 1 so auszulegen, dass sie spätestens dann gelöst werden, wenn die genannte Krafteinwirkung eine Größe von 40 kN erreicht. Somit ist in diesem Fall der Turbolader 3 wenigstens annähernd vollständig lose und kann damit eine weitere Verschiebung des ersten Katalysatorgehäuses 9 nicht oder zumindest nicht mehr wesentlich behindern. Dabei ist es vorgesehen, die erste Verbindungsstelle 23, die erste Trennstelle 12 und den Balgabschnitt 14 in wechselseitiger Abhängigkeit so auszulegen, dass ein Lösen der ersten Verbindungsstelle 23 und der ersten Trennstelle 12 erst dann erfolgt, wenn der Balgabschnitt 14 eine bestimmte Verkürzung von vorzugsweise wenigstens 20 mm erfahren hat. Der Balgabschnitt 14 ist somit bevorzugt so ausgelegt, dass er eine Verkürzung von wenigstens 20 mm bei Einwirkung einer axialen Druckkraft von 30 kN oder weniger ermöglicht.

Ein gezieltes kraftabhängiges Lösen der ersten Verbindungsstelle 23 ist bevorzugt dadurch ermöglicht, dass die entsprechende Schraubverbindung der Befestigungsvorrichtung 13 ein entgegen der Fahrtrichtung geöffnetes Gabelloch zur Aufnahme der Verbindungsschraube aufweist. Bei Einwirkung der Druck- bzw. Aufprallkraft von vorzugsweise weniger als 40 kN entgegen der Fahrtrichtung 8 auf das Turbinengehäuse 4 kann die Verbindungsschraube aus der Gabellochaufnahme der ersten Verbindungsstelle 23 gedrückt werden. Damit sind eine Verschiebung des Turboladers 3 aus seiner Halteposition entgegen der Fahrtrichtung 8 und eine weitere Verschiebung des weiterhin mechanisch an den Turbolader 3 angekoppelten ersten Katalysatorgehäuses 9 ermöglicht. Dabei ist es bevorzugt vorgesehen, dass vor einem Lösen der ersten Verbindungsstelle 23 die Verbindung des Turbinengehäuses 4 mit dem Abgassammler 2 über die erste Trennstelle 12 bereits gelöst wird.

Infolge der Aufhebung einer Verschiebungsblockade des ersten Katalysatorgehäuses 9 durch Lösen der Verbindungen des Abgasturboladers 3 kann das erste Katalysatorgehäuse 9 bei weiterer Krafteinwirkung unter Energieabsorption weiter entgegen der Fahrtrichtung 8 verschoben werden und läuft schließlich auf das zweite Katalysatorgehäuse 16 auf. Eine bei dieser Verschiebung auftretende Energieabsorption wird teilweise, bevorzugt überwiegend, durch das oben erwähnte Abknicken des zweiten Abgasleitungselements 7 und ein Eindrücken des Einlasstrichters 19 des zweiten Katalysatorgehäuses 16 ermöglicht.

Um einen weiteren kräfteverzehrenden Verschiebungsweg nach Auflaufen des ersten Katalysatorgehäuses 9 auf das zweite Katalysatorgehäuse 16 zu ermöglichen, ist es einerseits vorgesehen, dass das erste Katalysatorgehäuse 9 zumindest auslassseitig eine gerippte Struktur 15 aufweist, welche ein Zusammendrücken entgegen der Fahrtrichtung 8 erleichtert. Auch das zweite Abgasleitungselement 17 ist vorzugsweise auf diese Weise gerippt ausgeführt oder weist einen Balgabschnitt 20 auf. Auch für das zweite Katalysatorgehäuse 16 kann eine Rippenstruktur vorgesehen sein, welche die Steifigkeit des zweiten Katalysatorgehäuses in axialer Richtung vermindert und ein Eindrücken in axialer Richtung erleichtert. Ferner kann durch Auslegung der zweiten Trennstelle 18 dafür gesorgt sein, dass diese bei Einwirkung einer vorgebbaren Kraft gelöst wird. Ferner bewirkt eine Anordnung von erstem Katalysatorgehäuse 9 und zweitem Katalysatorgehäuse derart, dass die Oberseite des zweiten Katalysatorgehäuses 16 im Bereich der geodätischen Anordnungshöhe des ersten Katalysatorgehäuses 9 liegt, dass das erste Katalysatorgehäuse 9 vom zweiten Katalysatorgehäuse 16, insbesondere von dessen Oberseite, radial eingedrückt werden kann. Ein Eindrücken des ersten Katalysatorgehäuses 9 ist bevorzugt auch dadurch erleichtert, dass dieses wenigstens teilweise, bevorzugt überwiegend aus einem Metallmaterial mit einer Materialstärke von weniger als 1 mm ausgeführt ist. Auch das zweite Katalysatorgehäuse 16 kann ganz oder teilweise aus einem solchen Dünnblechmaterial gefertigt sein.

Ein radiales Eindrücken oder sogar ein zerstörendes Aufbrechen des ersten Katalysatorgehäuses 9 nach Auflaufen auf das zweite Katalysatorgehäuse 16 kann schließlich dadurch erleichtert werden, dass im Bereich zwischen dem ersten Katalysatorgehäuse 9 und dem zweiten Katalysatorgehäuse 16 ein Flachmaterialbauteil vorgesehen ist, dessen Flächennormale wenigstens annähernd senkrecht zur Fahrtrichtung 8 orientiert ist. Insbesondere kann ein etwa waagrecht stehendes Flachmaterial vorgesehen sein, welches vorzugsweise am zweiten Katalysatorgehäuse 16, insbesondere an dessen oberen Bereich befestigt ist. Trifft das erste Katalysatorgehäuse 9 auf die Flachseite des Flachmaterials, so ist durch Krafteinwirkung entgegen der Fahrtrichtung 8 ein Eindrücken des ersten Katalysatorgehäuses erleichtert. Bei weiterer Verschiebung ist auch ein zerstörendes Brechen des im ersten Katalysatorgehäuses 9 angeordneten Oxidationskatalysators ermöglicht, wodurch sich die Steifigkeit stark verringert, eine Blockbildung vermieden und ein weiterer kraftaufnehmender Verschiebungs- bzw. Verformungsweg bereitgestellt wird.

In vorteilhafter Weise kann auch vorgesehen sein, bei einem Auflaufen des ersten Katalysatorgehäuses 9 auf das zweite Katalysatorgehäuse 16 ein ausweichendes Verschieben des ersten Katalysatorgehäuses, insbesondere in eine Richtung schräg nach oben zu ermöglichen. Hierzu ist es besonders vorteilhaft, wenn durch eine das erste Katalysatorgehäuse 9 mit dem zweiten Abgasleitungselement 17 verbindende Schweißnaht 25 so ausgelegt ist, dass diese vor einem Auflaufen des ersten Katalysatorgehäuses 9 auf das zweite Katalysatorgehäuse 16 aufreißt. Hierzu kann die Schweißnaht 25 insgesamt in ihrer Festigkeit entsprechend ausgelegt sein. Zusätzlich oder alternativ kann die Schweißnaht 25 eine Sollbruchstelle aufweisen, welche ein erleichtertes Aufreißen der Schweißnaht 25 ermöglicht. Eine beispielweise durch eine Materialschwachstelle bewirkte Sollbruchstelle ist bevorzugt an einem dem zweiten Katalysatorgehäuse 16 zugewandten und/oder abgewandten Ende der Schweißnaht 25 vorgesehen. Reißt die Schweißnaht auf, so ist das erste Katalysatorgehäuse nahezu lose und ein Aufgleiten auf das zweite Katalysatorgehäuse 16 ist ermöglicht. Ein solches Aufgleiten kann durch eine schräge Anfasung des zweiten Katalysatorgehäuses 16 erleichtert werde. Vorzugsweise ist jedoch ein entsprechend geformtes Haltebauteil vorgesehen, welches auch der Befestigung des des ersten und/oder zweiten Katalysatorgehäuses 9, 16 dient und eine entsprechende Gleitfläche bereitstellt, was nachfolgend unter Bezug auf Fig. 4 veranschaulicht ist.

In Fig. 4 ist speziell ein Ausschnitt der erfindungsgemäßen Systemanordnung gezeigt, in dem ein Zwischenbereich zwischen dem ersten Katalysatorgehäuse 9 und dem zweiten Katalysatorgehäuse 16 dargestellt ist. Ein am oberen Bereich des ersten Katalysatorgehäuses 9 befestigtes Haltebauteil 27 ist vorliegend etwa V-förmig ausgebildet und überbrückt den Freiraum zwischen dem ersten Katalysatorgehäuse 9 und dem zweiten Katalysatorgehäuse 16. Das Haltebauteil 27 ist dabei schräg nach oben geneigt orientiert und überlappt den oberen vorderen Bereich des zweiten Katalysatorgehäuses 16. Das Haltebauteil 27 kann an seinem verjüngten unteren Ende abgeflacht ausgeführt sein, wodurch eine Gleitfläche 28 zur Verfügung gestellt wird, welche ein Aufgleiten des ersten Katalysatorgehäuses 9 auf das zweite Katalysatorgehäuse 16 erleichtert wird. Für das Haltebauteil 27 kann jedoch auch eine scharfkantige Unterseite vorgesehen sein, welche bei einem Aufschieben des ersten Katalysatorgehäuses 9 auf das zweite Katalysatorgehäuse 16 ein Eindrücken oder Aufschneiden des zweiten Katalysatorgehäuses 16 bewirkt, wodurch dessen Festigkeit in axialer Richtung vermindert wird. Dadurch ist ein kräfteverzehrendes Eindrücken des zweiten Katalysatorgehäuses 16 in axialer Richtung ermöglicht und ein weiterer energieabsorbierender Verschiebungs- und Verformungsweg bereitgestellt.

Insgesamt ist durch die oben geschilderten Maßnahmen eine kompakte und dennoch crashsichere Systemanordnung geschaffen, bei welcher insbesondere bei einem Frontalaufprall oder einem seitlich versetzten und/oder schräg vorn vorne erfolgenden Aufprall auf ein Hindernis eine besonders gute Energieabsorption ermöglicht und ein verletzungsgefährdendes Eindringen von Bauteilen in den Fahrgastraum weitestgehend vermieden ist.

## Patentansprüche

1. Crashtolerante Systemanordnung in einem im Vorderwagenbereich eines Kraftfahrzeugs angeordneten Motorraum, umfassend
- einen im Motorraum angeordneten Verbrennungsmotor mit einem Motorblock (1),
- einen Abgase des Verbrennungsmotors aufnehmenden Abgassammler (2),
- einen dem Verbrennungsmotor zugeordneten Abgasturbolader (3) mit einem Abgaseinlass (5) und einem Abgasauslass (6),
- sowie ein Abgasreinigungssystem (7) mit einem in Fahrtrichtung (8) vor dem Abgasturbolader (3) angeordneten, im Wesentlichen zylindrischen ersten Katalysatorgehäuse (9), in dem ein erstes Abgaskatalysatorelement angeordnet ist,
**dadurch gekennzeichnet, daß**
- ein erstes Abgasleitungselement (10) zur Abgasführung vom Abgasauslass (6) des Abgasturboladers (3) zum ersten Katalysatorgehäuses (9) vorgesehen ist, das sich vom Abgasauslass (6) des Abgasturboladers (3) zu einem Einlasstrichter (11) des ersten Katalysatorgehäuses (9) erstreckt und eine im Wesentlichen entgegen der Fahrtrichtung (8) auf das erste Katalysatorgehäuse (9) einwirkende Druckkraft wenigstens teilweise auf den Abgasturbolader (3) übertragenen kann,
- der Abgasturbolader (3) durch eine erste Befestigungsvorrichtung (12) mit dem Abgassammler (2) und durch eine zweite Befestigungsvorrichtung (13) mit dem Motorblock (1) mechanisch verbunden ist, wobei die erste und die zweite Befestigungsvorrichtung (12, 13) so ausgelegt sind, dass ein Lösen der Verbindung des Abgasturboladers (3) mit dem Abgassammler (2) und/oder ein Lösen der Verbindung des Abgasturboladers (3) mit dem Motorblock (1) innerhalb eines vorgegebenen oberen Wertebereichs für die Druckkraft erfolgt.

2. Systemanordnung nach Anspruch 1,
**dadurch gekennzeichnet,**
**dass** das erste Abgasleitungselement (10) einen Balgabschnitt (14) aufweist, der eine Verkürzung um wenigstens 20 mm innerhalb eines vorgegebenen unteren Wertebereichs für die Druckkraft erfährt, dessen Werte kleiner als die Werte des oberen Wertebereichs sind.

3. Systemanordnung nach Anspruch 1 oder 2,
**dadurch gekennzeichnet**,
die erste und die zweite Befestigungsvorrichtung (12, 13) so ausgelegt sind, dass ein Lösen der Verbindung des Abgasturboladers (3) mit dem Abgassammler (2) und/oder der Verbindung des Abgasturboladers (3) mit dem Motorblock (1) bei einer Druckkraft von weniger als 40 kN erfolgt.

4. Systemanordnung nach einem der Ansprüche 2 bis 3,
**dadurch gekennzeichnet,**
**dass** eine Obergrenze des unteren Wertebereichs für die Druckkraft 30 kN beträgt.

5. Systemanordnung nach einem der Ansprüche 1 bis 3,
**dadurch gekennzeichnet,**
**dass** das erste Katalysatorgehäuse (9) wenigstens annähernd senkrecht im Motorraum angeordnet ist.

6. Systemanordnung nach einem der Ansprüche 1 bis 5,
**dadurch gekennzeichnet,**
**dass** das erste Katalysatorgehäuse (9) wenigstens abschnittsweise eine gerippte Struktur (15) aufweist.

7. Systemanordnung nach einem der Ansprüche 1 bis 5,
**dadurch gekennzeichnet,**
**dass** das Abgasreinigungssystem (7) ein zylindrisches zweites Katalysatorgehäuse (16) aufweist, in dem ein zweites Abgaskatalysatorelement und/oder ein Partikelfilterelement angeordnet ist, wobei ein zweites Abgasleitungselement (17) zur Abgasführung von der Auslassseite des ersten Katalysatorgehäuses (9) zur Einlassseite des zweiten Katalysatorgehäuses (16) vorgesehen ist, das an einer Trennstelle (18) lösbar mit einem Einlasstrichter (19) des zweiten Katalysatorgehäuses (16) verbunden ist.

8. Systemanordnung nach Anspruch 7,
**dadurch gekennzeichnet,**
**dass** zweite Abgasleitungselement (17) wenigstens abschnittsweise gerippt ausgeführt ist oder einen Balgabschnitt (20) aufweist.

9. Systemanordnung nach Anspruch 7 oder 8,
**dadurch gekennzeichnet,**
**dass** in einem Übergangsbereich vom zweiten Abgasleitungselement (17) zum zweiten Katalysatorgehäuse (16) eine als Soll-Knickstelle wirkende Strukturmodifikation vorgesehen ist.

10. Systemanordnung nach einem der Ansprüche 7 bis 9,
**dadurch gekennzeichnet,**
**dass** das zweite Katalysatorgehäuse (16) wenigstens annähernd waagrecht im Motorraum und geodätisch unterhalb des Abgasturboladers (3) sowie in Fahrtrichtung (8) gesehen hinter dem ersten Katalysatorgehäuse (9) und mit geringem oder vernachlässigbaren seitlichem Versatz zum ersten Katalysatorgehäuse (9) derart angeordnet ist, dass die Oberseite des zweiten Katalysatorgehäuses (16) im Bereich der geodätischen Anordnungshöhe des ersten Katalysatorgehäuses (9) liegt.

11. Systemanordnung nach einem der Ansprüche 7 bis 10,
**dadurch gekennzeichnet,**
**dass** das zweite Katalysatorgehäuse (16) abgaseintrittseitig über einen ersten Halter (21) und abgasaustrittseitig über einen zweiten Halter (22) kraftschlüssig und/oder formschlüssig mit dem Motorblock (1) verbunden ist, wobei der erste Halter (21) eine in Fahrtrichtung (8) gesehen geringere Biegesteifigkeit als der zweite Halter (22) aufweist.

12. Systemanordnung nach einem der Ansprüche 7 bis 11,
**dadurch gekennzeichnet,**
**dass** im Bereich zwischen dem ersten Katalysatorgehäuse (9) und dem zweiten Katalysatorgehäuse (16) ein Flachmaterialbauteil vorgesehen ist, dessen Flächennormale wenigstens annähernd senkrecht zur Fahrtrichtung (8) orientiert ist.

13. Systemanordnung nach einem der Ansprüche 7 bis 11,
**dadurch gekennzeichnet,**
**dass** im Bereich zwischen dem ersten Katalysatorgehäuse (9) und dem zweiten Katalysatorgehäuse (16) ein Haltebauteil (27) für das erste und/oder das zweite Katalysatorgehäuse (9, 16) vorgesehen ist, welches eine zur Fahrtrichtung 8 und schräg geodätisch nach oben gerichtete Gleitfläche (28) aufweist, welche ein Aufschieben des ersten Katalysatorgehäuses (9) auf das zweite Katalysatorgehäuse (16) ermöglicht.

14. Systemanordnung nach einem der Ansprüche 7 bis 13,
**dadurch gekennzeichnet,**
**dass** das erste Katalysatorgehäuse (9) und/oder das zweite Katalysatorgehäuse (16) wenigstens teilweise aus einem Metallmaterial mit einer Materialstärke von weniger als 1 mm ausgeführt sind.

15. Systemanordnung nach einem der Ansprüche 7 bis 13,
**dadurch gekennzeichnet,**
**dass** das erste Katalysatorgehäuse (9) mittels einer Schweißnaht mit dem zweiten Abgasleitungselement (17) verbunden ist, wobei die Schweißnaht eine Sollbruchstelle aufweist, welche bei Einwirkung einer Zugkraft vorgegebener Größe auf die Sollbruchstelle ein Aufreißen der Schweißnaht ermöglicht.

## Claims

1. Crash-tolerant system arrangement in an engine compartment arranged in the area of the front part of a motor vehicle, comprising:
- an internal combustion engine, with an engine block (1), arranged in the engine compartment,
- an exhaust gas collector (2) receiving exhaust gases of the internal combustion engine ,
- an exhaust gas turbocharger (3), assigned to the internal combustion engine, with an exhaust gas inlet (5) and an exhaust gas outlet (6),
- and also an exhaust gas purification system (7) with a first catalyst housing (9) which is substantially cylindrical and is arranged in front of the exhaust gas turbocharger (3) when viewed in the direction of travel (8), a first exhaust gas catalyst element being arranged in the first catalyst housing (9),
**characterised in that**
- a first exhaust gas pipe element (20) is provided for conveying exhaust gas from the exhaust gas outlet (6) of the exhaust gas turbocharger (3) to the first catalyst housing (9), which extends from the exhaust gas outlet (6) of the exhaust gas turbocharger (3) to an inlet funnel (11) of the first catalyst housing (9) and can transfer a compressive force acting substantially contrary to the direction of travel (8) on the first catalyst housing (9) at least partially to the exhaust gas turbocharger (3),
- the exhaust gas turbocharger (3) is mechanically connected by a first fixing device (12) to the exhaust gas collector (2) and by a second fixing device (13) to the engine block (1), wherein the first and the second fixing device (12, 13) are designed so that a release of the connection of the exhaust gas turbocharger (3) to the exhaust gas collector (2) and / or a release of the connection of the exhaust gas turbocharger (3) to the engine block (1) take(s) place within a predefined upper value range for the compressive force.

2. System arrangement according to claim 1,
**characterised in that**
the first exhaust gas pipe element (10) has a bellows portion (14) which undergoes a shortening by at least 20 mm within a predefined lower value range for the compressive force, of which the values are smaller than the values of the upper value range.

3. System arrangement according to claim 1 or 2,
**characterised in that**
the first and the second fixing device (12, 13) are designed so that a release of the connection of the exhaust gas turbocharger (3) to the exhaust gas collector (2) and / or the connection of the exhaust gas turbocharger (3) to the engine block (1) is / are realised with a compressive force of less than 40 kN.

4. System arrangement according to one of claims 2 to 3,
**characterised in that**
an upper threshold of the lower value range for the compressive force is 30 kN.

5. System arrangement according to one of claims 1 to 3,
**characterised in that**
the first catalyst housing (9) is arranged at least approximately vertically in the engine compartment.

6. System arrangement according to one of claims 1 to 5,
**characterised in that**
the first catalyst housing (9) has a ribbed structure (15) at least in portions.

7. System arrangement according to one of claims 1 to 5,
**characterised in that**
the exhaust gas purification system (7) has a cylindrical second catalyst housing (16), in which a second exhaust gas catalyst element and / or a particle filter element is / are arranged, wherein a second exhaust gas pipe element (17) is provided for conveying exhaust gas from the outlet side of the first catalyst housing (9) to the inlet side of the second catalyst housing (16) which is connected in a releasable manner at a separation point (18) to an inlet funnel (19) of the second catalyst housing (16).

8. System arrangement according to claim 7,
**characterised in that**
the second exhaust gas pipe element (17) has a ribbed configuration at least in portions or a bellows portion (20).

9. System arrangement according to claim 7 or 8,
**characterised in that**
a structure modification acting as a pre-set bending point is provided in a transition area from the second exhaust gas pipe element (17) to the second catalyst housing (16).

10. System arrangement according to one of claims 7 to 9,
**characterised in that**
the second catalyst housing (16) is arranged at least approximately horizontally in the engine compartment and geodetically below the exhaust gas turbocharger (3) and also behind the first catalyst housing (9) when viewed in the direction of travel (8) and with a small or negligible lateral offset with respect to the first catalyst housing (9) such that the upper side of the second catalyst housing (16) lies in the area of the geodetic arrangement height of the first catalyst housing (9).

11. System arrangement according to one of claims 7 to 10,
**characterised in that**
the second catalyst housing (16) is connected at the exhaust gas inlet side via a first holder (21) and at the exhaust gas outlet side via a second holder (22) in a force-locking and / or positively-locking way to the engine block (1), wherein the first holder (21) has a lower flexural rigidity when viewed in the direction of travel (8) than the second holder (22).

12. System arrangement according to one of claims 7 to 11,
**characterised in that**
a flat material component is provided in the area between the first catalyst housing (9) and the second catalyst housing (16), the surface normal of the flat material component being orientated at least approximately perpendicularly to the direction of travel (8).

13. System arrangement according to one of claims 7 to 11,
**characterised in that**
a holding component (27) for the first and / or the second catalyst housing (9, 16) is provided in the area between the first catalyst housing (9) and the second catalyst housing (16), which has an inclined geodetically upwardly orientated slide surface (28) relative to the direction of travel (8), the slide area (28) facilitating displacement of the first catalyst housing (9) onto the second catalyst housing (16).

14. System arrangement according to one of claims 7 to 13,
**characterised in that**
the first catalyst housing (9) and / or the second catalyst housing (16) is / are made at least partially from a metal material with a material thickness of less than 1 mm.

15. System arrangement according to one of claims 7 to 13,
**characterised in that**
the first catalyst housing (9) is joined by means of a welded seam to the second exhaust gas pipe element (17), wherein the welded seam has a predetermined breaking point, which facilitates rupture of the welded seam upon action of a tensile force of a predefined dimension on the predetermined breaking point.

## Revendications

1. Agencement de système résistant aux collisions dans un compartiment moteur disposé dans une zone avant de véhicule automobile, comprenant
- un moteur à combustion interne disposé dans le compartiment moteur doté d'un bloc-moteur (1).
- un collecteur (2) de gaz d'échappement recevant les gaz d'échappement provenant du moteur à combustion interne,
- un turbocompresseur (3) associé au moteur à combustion interne, comportant un orifice d'admission (5) de gaz d'échappement et un orifice de sortie (6) de gaz d'échappement,
- ainsi qu'un système (7) de purification des gaz d'échappement comprenant un premier carter (9) de catalyseur essentiellement cylindrique disposé en amont du turbocompresseur (3), ledit carter de catalyseur comprenant un premier élément de catalyseur de gaz d'échappement, **caractérisé en ce qu'**il est prévu un premier élément (10) de conduite de gaz d'échappement destiné à guider les gaz d'échappement provenant de l'orifice de sortie (6) de gaz d'échappement du turbocompresseur (3) vers le premier carter (9) de catalyseur, qui s'étend à partir de l'orifice de sortie de gaz d'échappement (6) du turbocompresseur (3) vers une trompette d'admission (11) du premier carter (9) de catalyseur et une force de pression essentiellement à l'opposé d'une direction de marche (8) agissant sur le premier carter (9) de catalyseur peut être transmise au moins partiellement au turbocompresseur (3),
- le turbocompresseur (3) est relié mécaniquement par un premier dispositif de fixation (12) au collecteur (12) de gaz d'échappement et par un second dispositif de fixation (13) au bloc moteur (1), le premier et le second dispositif de fixation (12, 13) étant conçus de telle sorte que un détachement de la liaison du turbocompresseur (3) au collecteur (2) de gaz d'échappement et/ou un détachement de la liaison du turbocompresseur (3) au bloc moteur s'effectue dans une plage de valeur supérieure prédéfinie pour la force de pression.

2. Agencement de système selon la revendication 1, **caractérisé en ce que** le premier élément (10) de conduite de gaz d'échappement présente une section (14) de soufflet qui est soumise à un rétrécissement d'au moins 20 mm dans une plage de valeur inférieure prédéfinie pour la force de pression, dont les valeurs sont inférieures aux valeurs de la plage de valeur supérieure.

3. Agencement de système selon la revendication 1 ou 2, **caractérisé en ce que** le premier et le second dispositif de fixation (12, 13) sont conçus de telle sorte qu'un détachement de la liaison du turbocompresseur (3) au collecteur de gaz d'échappement (2- et/ou de la liaison du turbocompresseur (3) au bloc moteur (1) ait lieu lorsque la force de pression est inférieure à 40 kN.

4. Agencement de système selon l'une quelconque des revendications de 2 à 3, **caractérisé en ce qu'**une limite supérieure de la plage de valeur inférieure s'élève à 30 kN pour la force de pression.

5. Agencement de système selon l'une quelconque des revendications de 1 à 3, **caractérisé en ce que** le premier carter (9) de catalyseur est disposé au moins approximativement perpendiculairement dans le compartiment moteur.

6. Agencement de système selon l'une quelconque des revendications de 1 à 5, **caractérisé en ce que** le premier carter (9) de catalyseur présente au moins en partie une structure nervurée (15).

7. Agencement de système selon l'une quelconque des revendications de 1 à 5, **caractérisé en ce que** le système (7) d'épuration de gaz d'échappement présente un second carter (16) de catalyseur cylindrique dans lequel est disposé un second élément de catalyseur de gaz d'échappement et/ou un élément de filtre à particules, étant prévu un second élément (17) de conduite de gaz d'échappement destiné à guider les gaz d'échappement à partir du côté sortie du premier carter (9) de catalyseur en direction du côté admission du second carter de catalyseur (16), qui est relié mobile au niveau d'un point de séparation (18) à une trompette d'admission (19) du second carter (16) de catalyseur.

8. Agencement de système selon la revendication 7, **caractérisé en ce que** le second élément (17) de conduite de gaz d'échappement est au moins en partie nervuré ou présente une section (20) de soufflet.

9. Agencement de système selon la revendication 7 ou 8, **caractérisé en ce que** dans une zone de transition entre le second élément (17) de conduite de gaz d'échappement et le second carter (16) de catalyseur est disposée une modification de structure agissant en tant que point de pli théorique.

10. Agencement de système selon l'une quelconque des revendications de 7 à 9, **caractérisé en ce que** le second carter (16) de catalyseur est disposé au moins approximativement horizontalement dans le compartiment moteur et géodésiquement en dessous du turbocompresseur (3) et observé dans la direction de marche (8) derrière le premier carter (9) de catalyseur de sorte que la face supérieure du second carter (16) de catalyseur se situe dans la zone de la hauteur d'agencement géodésique du premier carter (9) de catalyseur.

11. Agencement de système selon l'une quelconque des revendications de 7 à 10, **caractérisé en ce que** le second carter (16) de catalyseur côté admission de gaz d'échappement est relié par un premier support (21) et côté sortie de gaz d'échappement par un second support (22) au bloc moteur (1) par complémentarité de forme et/ou par liaison de force, le premier support (21) présentant une résistance au pliage inférieure - observée dans la direction de marche (8) - à celle du second support (22).

12. Agencement de système selon l'une quelconque des revendications de 7 à 11, **caractérisé en ce que** la zone entre le premier carter (9) de catalyseur et le second carter (16) de catalyseur comprend un composant en matériau plat dont la normale de surface est orientée au moins approximativement perpendiculairement à la direction de la marche (8).

13. Agencement de système selon l'une quelconque des revendications de 7 à 11, **caractérisé en ce que** dans la zone entre le premier carter (9) de catalyseur et le second carter (16) de catalyseur est disposé un composant de support (27) pour le premier et/ou le second carter (9, 16) de catalyseur qui présente une surface de glissement (28) orientée géodésiquement vers le haut et inclinée par rapport à la direction de la marche (8), ladite surface de glissement permet un glissement du premier carter (9) de catalyseur sur le second carter (16) de catalyseur.

14. Agencement de système selon l'une quelconque des revendications de 7 à 13, **caractérisé en ce que** le premier carter (9) de catalyseur et/ou le second carter (16) de catalyseur sont constitués au moins en partie en métal d'une épaisseur inférieure à 1 mm.

15. Agencement de système selon l'une quelconque des revendications de 7 à 13, **caractérisé en ce que** le premier carter (9) de catalyseur est relié au moyen d'un joint de soudure au second élément (17) de conduite de gaz d'échappement, le joint de soudure présentant un point de rupture théorique qui permet par l'action d'une force de traction d'une ampleur prédéfinie sur le point de rupture le déchirement du joint de soudure.
